Europäisches Patentamt

European Patent Office

Office européen des brevets

(11) Veröffentlichungsnummer: **0 254 808**
**B1**

# EUROPÄISCHE PATENTSCHRIFT

(45) Veröffentlichungstag der Patentschrift: **14.11.90**

(51) Int. Cl.⁵: **B 60 N 2/48**

(21) Anmeldenummer: **87105382.3**

(22) Anmeldetag: **10.04.87**

(54) Höhen- und neigungsverstellbare Kopfstütze mit mittlerem Fenster für Kraftfahrzeugsitze.

(30) Priorität: **30.07.86 DE 3625691**

(43) Veröffentlichungstag der Anmeldung:
**03.02.88 Patentblatt 88/05**

(45) Bekanntmachung des Hinweises auf die
Patenterteilung:
**14.11.90 Patentblatt 90/46**

(84) Benannte Vertragsstaaten:
**BE ES FR GB IT NL SE**

(56) Entgegenhaltungen:
**EP-A-0 175 959**
**DE-A-3 021 122**
**DE-U-7 623 536**
**DE-U-7 722 401**
**FR-A-2 544 264**

(73) Patentinhaber: **FHS STAHLVERFORMUNG
GMBH
Arnsberger Strasse 10-12 Postfach 413
D-5860 Iserlohn (DE)**

(72) Erfinder: **Möhlmann, Willfried
Heinrich-Zille-Strasse 9
D-3354 Dassel (DE)**

(74) Vertreter: **Oedekoven, Wolf-Dieter, Dipl. Ing.
Erhardtstrasse 8/V
D-8000 München 5 (DE)**

Courier Press, Leamington Spa, England.

**Beschreibung**

Die Erfindung bezieht sich auf eine höhen- und neigungsverstellbare Kopfstütze mit mittlerem Fenster für Kraftfahrzeugsitze der im Oberbegriff des Patentanspruchs 1 angegebenen Gattung.

Solche Kopfstützen, welche allerdings nur höhenverstellbar, nicht aber auch neigungsverstellbar sind, gehören zum Stande der Technik (DE—U 76 23 536). Dabei sind die beiden hohlen Seitenstreben des Stützrahmens jeweils hülsenförmig ausgebildet, um das zugehörige Tragstangende gleiten zu führen, und ist der Polsterkörper mit zwei elastischen Klemmorganen für die eine bzw. die andere Tragstange versehen, insbesondere zwei Gummihülsen, welche jeweils die zugehörige Tragstange neben der Tragstangenöffnung der betreffenden Seitenstrebe des Stützrahmens umspannen.

Ebenfalls bekannt sind derartige Kopfstützen, welche nur neigungsverstellbar, nicht aber auch höhenverstellbar sind (DE—U 77 22 401). Dabei weisen die beiden hohlen Seitenstreben des Stützrahmens jeweils am tragstangenseitigen Ende eine seitliche Kammer auf und sind die beiden in den Seitenstreben aufgenommenen Tragstangenenden jeweils mit einem rechtwinklig abgebogenen Endabschnitt versehen, welcher in einer geschlitzten Kunststoffbüchse eingespannt ist, die in der Kammer der dem betreffenden Tragstangende zugeordneten Seitenstrebe angeordnet und mit dem Stützrahmen verschraubt ist. Die beiden Seitenstrebenkammern liegen einander zwischen der mittleren Öffnung des Stützrahmens und dessen tragstangenseitigem Ende gegenüber, ebenso wie die beiden abgebogenen Tragstangenendabschnitte, um welche der Stützrahmen bezüglich der Tragstangen verschwenkt werden kann, bis innere Anschlagflächen seiner Seitenstreben an den Tragstangen auf der einen bzw. der anderen Seite derselben zur Anlage kommen.

Schließlich sind Kopfstützen genau der im Oberbegriff des Patentanspruchs 1 angegebenen Gattung bekannt, welche also sowohl höhenverstellbar als auch neigungsverstellbar sind (DE—C 30 21 122 und DE—A 32 00 321). Dabei sind in den beiden hohlen Seitenstreben des Stützrahmens zwei Gleithülsen aus Kunststoff angeordnet, welche sich mindestens über die halbe Höhe des Stützrahmens erstrecken, die in den Seitenstreben aufgenommenen Enden der beiden Tragstangen gleitend führen und in den Seitenstreben um eine gemeinsame Achse verschwenkbar sind, welche sich im Bereich der tragstangenseitigen Längsstrebe des Stützrahmens parallel zu derselben erstreckt. Die Gleithülsen sind an den dieser Längsstrebe benachbarten Enden, von denen sie sich zur anderen Längsstrebe des Stützrahmens hin bzw. in entgegengesetzter Richtung zu den Tragstangenöffnungen von dessen Seitenstreben hin erstrecken, auf den beiden einander zugewandten Seiten jeweils mit einem senkrechten Seitenzapfen bzw. auf-derselben Seite neben der von den beiden zugehörigen Tragstangenenden definierten Fläche jeweils mit einem senkrechten Seitenansatz versehen, wobei die beiden die erwähnte Schwenkachse definierenden Seitenzapfen jeweils in einer geschlitzten Kunststoffbüchse eingespannt sind, die in einer im benachbarten Ende der tragstangenseitigen Längsstrebe des Stützrahmens ausgebildeten Kammer angeordnet und mit letzterem verschraubt ist, bzw. ein gemeinsamer Lagerbolzen sowohl die beiden Seitenansätze als auch die beiden Seitenstreben des Stützrahmens durchsetzt, welcher die erwähnte Schwenkachse definiert. Auch sind die Gleithülsen jeweils mit dem darin verschiebbaren Tragstangende verrrastbar und dazu mit einem federnden Rastelement versehen, welches mit Rastkerben des Tragstangenendes zusammenwirkt. Die Seitenstreben des Stützrahmens weisen jeweils innere, von der besagten Schwenkachse weg divergierende Anschlagflächen für die zugehörige Gleithülse auf.

Der Erfindung liegt die Aufgabe zugrunde, eine Kopfstütze der eingangs angegebenen Art zu schaffen, welche sich insbesondere durch einen außerordentlich einfachen und kostengünstigen sowie bei störungsfreier Verstellbarkeit robusten und bei größtmöglichem Komfort kompakten Aufbau auszeichnet.

Diese Aufgabe ist durch die im kennzeichnenden Teil des Patentanspruchs 1 angegebenen Merkmale gelöst. Vorteilhafte Ausgestaltungen der erfindungsgemäßen Kopfstütze sind in den restlichen Patentansprüchen angegeben.

Nachstehend sind zwei Ausführungsformen der erfindungsgemäßen Kopfstütze anhand von Zeichnungen beispielsweise beschrieben. Darin zeigt:

Fig. 1 je zur Hälfte die Vorderansicht bzw. den Schnitt entlang der Linie I—I in Fig. 2 einer ersten Ausführungsform;

Fig. 2 den Schnitt entlang der Linie II—II in Fig. 1 in größerem Maßstab;

Fig. 3 den Schnitt entlang der Linie III—III in Fig. 2;

Fig. 4 den Schnitt entlang der Linie IV—IV in Fig. 2, wobei der Polsterkörper weggelassen ist; und

Fig. 5 den Schnitt entsprechend demjenigen gemäß Fig. 2 einer zweiten Ausführungsform.

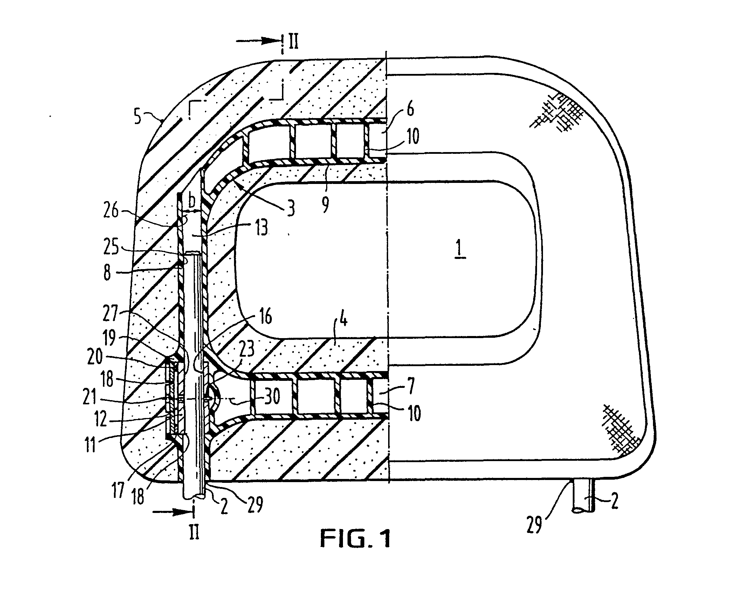

Die höhen- und neigungsverstellbare Kopfstütze mit einem mittleren Fenster 1 für Kraftfahrzeugsitze gemäß Fig. 1 bis 4 weist zwei Tragstangen 2 aus Metall, einen Stützrahmen 3 aus Kunststoff un einen Polsterkörper 4 aus geschäumten Kunststoff auf, welcher in einer äußeren Hülle 5 aus textilem Material eingeschlossen und mit welchem der Stützrahmen 3 umschäumt ist.

Der in den verhältnismäßig nachgiebigen Polsterkörper 4 eingebettete, relativ starre Stützrahmen 3 weist eine obere Längsstrebe 6, eine untere Längsstrebe 7 und zwei Seitenstreben 8 auf, welche eine mittlere Öffnung 9 umschließen. Die beiden Längsstreben, 6, 7 sind hohl ausgebildet und mit inneren Versteifungswänden 10 versehen. Die beiden Seitenstreben 8 sind ebenfalls hohl ausgebildet, um die oberen Enden der Tragstangen 2 aufzunehmen, welche mit ihren unteren Eden an der Rückenlehne desjenigen Kraftfahrzeugsitzes befestigbar sind, der mit der Kopfstütze versehen werden soll.

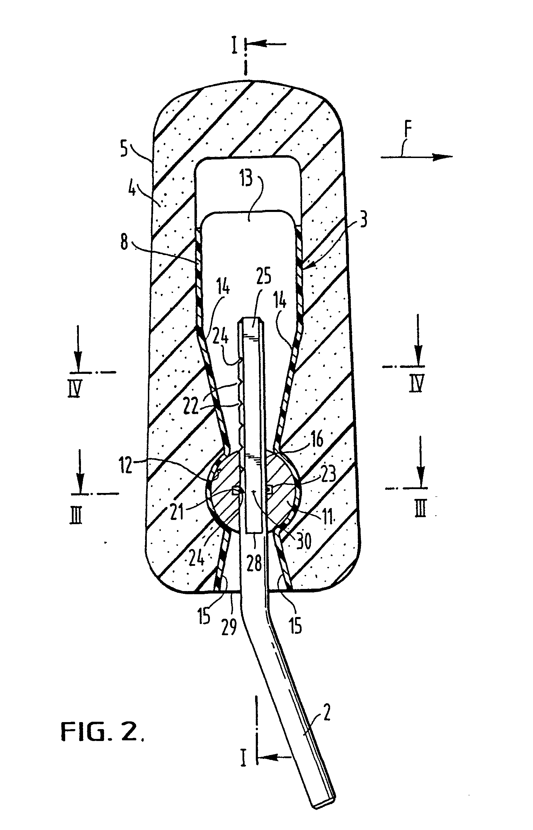

Der Stützrahmen 3 ist bezüglich der Tragstangen 2 verschiebbar sowie verschwenkbar. Dazu ist er auf zwei kreisrunden Scheiben 11 schwenkbar gelagert, welche auf den Tragstangen 2 verschiebbar sind. Jede Scheibe 11 ist in einer zylindrischen Erweiterung 12 entsprechenden Durchmessers des inneren Hohlraums 13 der einen bzw. der anderen Seitenstrebe 8 des Stützrahmens 3 aufgenommen, welcher schlitzförmig ausgebildet ist und in Stützrahmenlängsrichtung eine Breite b aufweist, die dem Durchmesser des im Hohlraum 13 aufgenommenen oberen Endes der einen bzw. der anderen Tragstange 2 im wesentlichen entspricht. Die Hohlräume 13 der beiden Seitenstreben 8 sind quer zu der durch die Linie I—I in Fig. 2 definierten Mittelebene des Stützrahmens 3 orientiert und jeweils mit einem Paar oberer Anschlagflächen 14 sowie einem Paar unterer Anschlagflächen 15 für die zugehörige Tragstange 2 bzw. deren oberes Ende versehen, welche von der Erweiterung 12 des jeweiligen Hohlraums 13 weg divergieren. Jede Scheibe 11 weist eine diametrale Durchgangsbohrung 16 auf, durch welche sich die zugehörige Tragstange 2 mit ihrem oberen Ende erstreckt.

Die zylindrischen Erweiterungen 12 der beiden Seitenstreben 8 des Stützrahmens 3 sind auf der jeweiligen Außenseite offen, um die zugehörige Schiebe 11 einsetzen zu können. Die entsprechende kreisrunde Öffnung 17 jeder Seitenstrebe 8 ist durch einen kreisrunden Deckel 18 verschlossen, welcher mit der jeweiligen Seitenstrebe 8 verrastet ist, wozu letztere radial federnde Rastzungen 19 aufweist, welche um ihre Öffnung 17 herum verteilt sind und den in dieselbe eingesetzten Deckel 18 hintergreifen. Zwischen den beiden Deckeln 18 und der jeweils benachbarten Schiebe 11 ist ein ringförmiges Reibelement 20 eingespannt, um ein bestimmtes Reibungsmoment zwischen den beiden Scheiben 11 und dem Stützrahmen 3 zu vermitteln, welches beim Verschwenken desselben auf den Scheiben 11 überwunden werden muß und gewährleistet, daß die jeweilige Stützrahmenschwenkstellung bezüglich der beiden Tragstangen 2 erhalten bleibt.

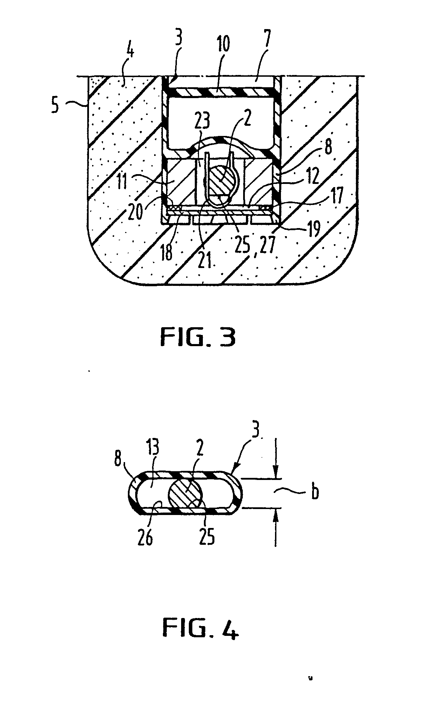

Die beiden Scheiben II sind mit den Tragstangen 2 verrastbar und zu diesem Zweck jeweils mit einem federnden Rastelement 21 versehen, welches mit einer Reihe von Rastkerben 22 am oberen Ende der zugehörigen Tragstange 2 zusammenwirkt und von einer im wesentlichen U-förmigen Stahlfeder gebildet ist, die in einen Querschlitz 23 der jeweiligen Scheibe 11 eingesetzt ist, um mit dem einen geraden Schenkel in die Rastkerben 22 des betreffenden Tragstangenendes einzugreifen und dasselbe auf der gegenüberliegenden Seite mit einem entsprechend kreisbogenförmig ausgewölbten Abschnitt des anderen Schenkels zu umgreifen, wie besonders deutlich aus Fig. 3 hervorgeht.

Ebenso wie der Stützrahmen 3 bezüglich der Tragstangen 2 infolge der inneren Anschlagflächen 14, 15 seiner beiden Seitenstreben 8 nur begrenzt verschwenkbar ist, kann er bezüglich der Tragstangen 2 auch nur begrenzt verschoben werden, und zwar zwischen der Stellung gemäß Fig. 1 und 2 und einer Stellung, in welcher die Stirnflächen der oberen Enden der beiden Tragstangen 2 etwa mit den oberen Mündungen der Durchgangsbohrungen 16 der beiden Scheiben 11 fluchten und deren Rastelemente 21 jeweils in die oberste Rastkerbe 22 der einen bzw. der anderen Tragstange 2 eingreifen. Es ist daher weder möglich, den Stützrahmen 3 von den Tragstangen 2 abzuziehen, noch können letztere oben aus dessen beiden Seitenstreben 8 austreten und in den Polsterkörper 4 eindringen, so daß die Seitenstreben 8 bzw. ihre schlitzförmigen Hohlräume 13 oben offenbleiben können. Die begrenzte gegenseitige Verschiebbarkeit von Stützrahmen 3 un Tragstangen 2 wird dadurch erreicht, daß die obere bzw. die untere Seitenflanke der obersten bzw. untersten Rastkerbe 22 jeder Tragstange 2 senkrecht zur Längsachse von deren oberem Ende verlaufend ausgebildet ist, um eine Anschlagfläche 24 für das Rastelement 21 der zugehörigen Scheibe 11 zu bilden, welche deren Verschiebung dem zugehörigen Tragstangenende weiter nach oben bzw. unten sperrt.

Um die Montage der Kopfstütze an der Rückenlehne des zugehörigen Kraftfahrzeugsitzes zu erleichtern, ist für die beiden Tragstangen 2 jeweils eine Verdrehsicherung vorgesehen, so daß sie sich nicht aus den dargestellen Drehstellungen bezüglich des Stützrahmens 3 herausdrehen können. Dazu weist jede Tragstange 2 gemäß Fig. 2 am oberen Ende eine ebene seitliche Abflachung 25 auf, welche an der benachbarten ebenen Seitenfläche 26 des Hohlraums 13 der zugehörigen Seitenstrebe 8 des Stützrahmens 3 anliegt, wie besonders deutlich aus Fig. 1 und 4 hervorgeht. Letztere verdeutlicht zusammen mit Fig. 3 auch, daß jeder Hohlraum 13 oberhalb seiner zylindrischen Erweiterung 12 enger als letztere ist, ebenso wie im übrigen gemäß Fig. 1 unterhalb der Erweiterung 12, da die Breite der letzteren auf die Dicke der zugehörigen Scheibe 11 abgestimmt sein muß, welche ihrerseits größer als der Durchmesser des oberen Endes der zugehörigen Tragstange 2 bzw. der Durchgangsbohrung 16 der Scheibe 11 sein muß. Gemäß Fig. 1 kann jede Durchgangsbohrung 16 ebenfalls mit einer ebenen, sich in Längsrichtung erstreckenden Abflachung 27 versehen sein, welche an der Abflachung 25 des oberen Endes der zugehörigen Tragstange 2 anliegt, wobei deren Schulter 28 am unteren Ende ihrer Abflachung 25 im Zusammenwirken mit der zugehörigen Scheibe 11 einen zusätzlichen Anschlag zur Begrenzung der Verschiebung der Tragstange 2 im Hohlraum 13 der betreffenden Seitenstrebe 8 des Stützrahmens 3 in Fig. 1 und 2 nach oben bildet.

Die beiden kreisrunden Scheiben 11 sind im Bereich der unteren Längsstrebe 7 des Stützrahmens 3 angeordnet, welche den unteren Tragstangenöffnungen 29 der beiden Seitenstreben 8 desselben benachbart ist, durch die hindurch die beiden Tragstangen 2 mit ihren gemäß Fig. 2 nach rechts abgewinkelten untern Enden nach außen ragen. Die beiden Scheiben 11 können jeweils aus Metall oder Kunststoff bestehen. Dabei ist darauf zu achten, daß ein bei allen zu erwartenden Betriebsbedingungen möglichst gleichbleibender Reibungskoeffizient zwischen den Scheiben 11 und den Erweiterungen 12 der Seitenstreben 8 des Stützrahmens 3 aus Kunststoff gewährleistet ist. Zu diesem Zweck können dann, wenn die Scheiben 11 aus Kunststoff bestehen, letztere jeweils am Umfang mit einem äußeren Metallring oder einer äußeren Metallbeschichtung und/oder die Erweiterungen 12 jeweils an den beiden einander gegenüberliegenden, schalenförmigen Wandungen mit je einem inneren Metallringsegment oder je einer inneren Metallbeschichtung versehen sein.

Zur Höhenverstellung der an der Rückenlehne eines Kraftfahrzeugsitzes montierten Kopfstütze gemäß Fig. 1 bis 4 genügt es, den Polsterkörper 4 zu ergreifen und auf den beiden Tragstangen 2 nach oben zu ziehen bzw. nach unten zu drücken, bis der gewünschte Abstand von der Oberkante der Rückenlehne erreicht ist und die beiden Rastelemente 21 der an den oberen Enden der Tragstangen 2 entlanglaufenden Scheiben 11 in die beiden entsprechenden Rastkerben 22 des einen bzw. des anderen Tragstangenendes einfallen. Zur Neigungsverstellung braucht ebenfalls nur der Polsterkörper 4 ergriffen und nach vorne gezogen bzw. nach hinten gedrückt zu werden, um den eingebetteten Stützrahmen 3 im gewünschten Ausmaß um die beiden Scheiben 11 in Fig. 2 im Uhrzeigersinn nach rechts bzw. entgegen dem Uhrzeigersinn nach links zu verschwenken, welche konzentrisch zu einer imaginären Querachse 30 zwischen den beiden oberen Tragstangenenden angeordnet sind, die also die Schwenkachse darstellt. Bei einem Aufprall auf die in Fig. 2 rechte Vorderseite des Polsterkörpers 4 entgegen der Fahrtrichtung F verschwenken der Polsterkörper 4 und der eingebettete Stützrahmen 3 aus der jeweils eingestellten Schwenkstellung um die Schwenkachse 30, bis die in Fig. 2 linke untere Anschlagfläche 15 sowie gegebenenfalls die in Fig. 2 rechte obere Anschlagfläche 14 des inneren Hohlraums 13 jeder Seitenstrebe 8 des Stützrahmens 3 am oberen Ende der zugehörigen Tragstange 2 zur Anlage kommt.

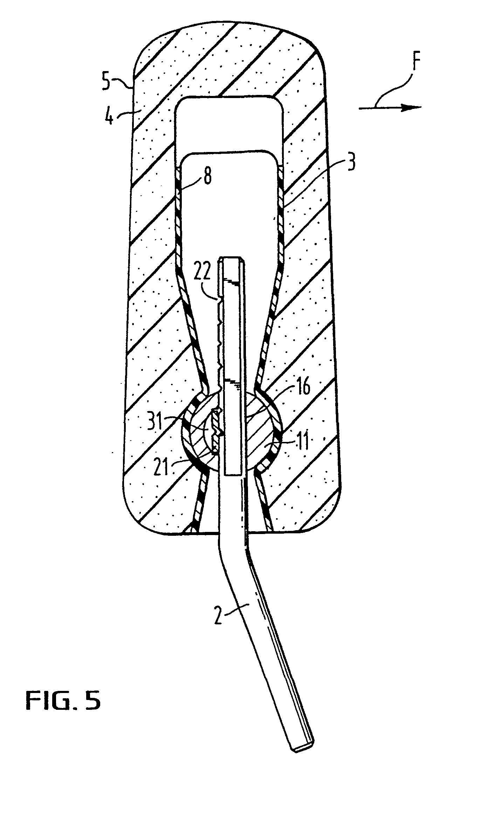

Die Ausführungsform gemäß Fig. 5 unterscheidet sich nur dadurch von derjenigen gemäß Fig. 1 bis 4, daß die beiden Rastelemente 21 der kreisrunden Scheiben 11 anders ausgebildet und angeordnet sind. Sie sind jeweils von einer Art Blattfeder mit einer mittleren Spitze zum Eingriff in die Rastkerben 22 der zugehörigen Tragstange 2 gebildet, welche in eine Querausnehmung 31 der jeweiligen Schiebe 11 eingesetzt ist, die in deren Durchgangsbohrung 16 übergeht.

Abwandlungen von den dargestellten und geschilderten Ausführungsformen sind möglich. Beispielsweise müssen die beiden Reibelemente 20 nicht ringförmig ausgebildet sein, sondern können sie jeweils auch von einer Vollscheibe gebildet sein, ebenso wie es möglich ist, die beiden Scheiben 11 ohne die Verwendung solcher Reibelemente 20 in den Erweiterungen 12 der beiden Seitenstreben 8 des Stützrahmens 3 derart zu verspannen, daß sich zwischen den Scheiben 11 und dem Stützrahmen 3 ein bestimmtes Reibungsmoment ergibt. So könnte daran gedacht werden, die beiden schalenförmigen Wandungen jeder Seitenstrebe 8, welche die zylindrische Erweiterung 12 von deren innerem Hohlraum 13 um die Schwenkachse 30 herum begrenzen und die zugehörige kreisrunde Scheibe 11 auf einander diametral gegenüberliegenden Seiten umschließen, mittels einer Schraubverbindung gegenseitig zu verspannen und gegen den Umfang der Scheibe 11 zu drücken, um dieselbe so einzuklemmen, daß sich das jeweils gewünschte Reibmoment zwischen ihr und den beiden schalenförmigen Wandungen ergibt.

Da die Scheiben 11 sehr dünn gehalten werden können und ihre für die jeweilige Durchgangsbohrung 16 erforderliche Dicke nur geringfügig größer als der Durchmesser der oberen Enden der Tragstangen 2 zu sein braucht, insbesondere dann, wenn die Tragstangenenden jeweils mit der Abflachung 25 versehen sind, ist es möglich, die beiden Scheiben 11 auch anderswo in den beiden Seitenstreben 8 des Stützrahmens 3 anzuordnen als gerade im Bereich von dessen unterer Längsstrebe 7, wie bei den dargestellen und geschilderten Ausführungsformen der Fall. Sie können durchaus beiderseits der mittleren Öffnung 9 des Stützrahmens 3 bzw. des mittleren Fensters 1 der Kopfstütze vorgesehen werden, falls gewünscht. Da die oberen Enden der Tragstangen 2 beiderseits der Scheiben 11 unmittelbar von den hohlen Seitenstreben 8 des Stützrahmens 3 umschlossen sind, können nicht nur die Längsstreben 6, 7 des Stützrahmens 3, sondern auch dessen Seitenstreben 8 außerordentlich schlank gehalten werden, so daß der Polsterkörper 4 selbst dann verhältnismäßig großvolumig ausgebildet werden kann, um den Komfort zu verbessern, wenn die Kopfstütze sehr kompakt gehalten werden und nur geringe Außenabmessungen aufweisen soll. Die Schwenklagerung des Stützrahmens 3 an den Tragstangen 2 ist insofern sehr günstig, als die beiden mit Hilfe der kreisrunden Scheiben 11 gebildeten Drehlager für den Stützrahmen 3 genau mit den beiden Tragstangen 2 fluchten, was einer robusten Bauweise und störungsfreien Verstellbarkeit der Kopfstütze zugute kommt. Sie besteht darüberhinaus auch nur aus verhältnismäßig wenigen, einfachen Komponenten und kann mit geringstmöglichen Werkzeug- sowie Arbeitsaufwand hergestellt werden, so daß sie außerordentlich kostengünstig ist.

## Patentansprüche

1. Höhen- und neigungsverstellbare Kopfstütze mit mittlerem Fenster (1) für Kraftfahrzeugsitze, welche

a) zwei mit je einem Ende an der Rückenlehne der Kraftfahrzeugsitze befestigbare Tragstangen (2) und

b) einen bezüglich der Tragstangen (2) verschiebbaren sowie verschwenkbaren, in einen Polsterkörper (4) eingebetteten Stützrahmen (3) mit hohlen Seitenstreben (8) zur Aufnahme des anderen Endes der einen bzw. der anderen Tragstange (2)

aufweist, dadurch gekennzeichnet, daß

c) der Stützrahmen (3) auf zwei kreisrunden Scheiben (11) schwenkbar gelagert ist, welche auf den Tragstangen (2) verschiebbar sind, wobei

d) die Scheiben (11) jeweils in einer zylindrischen Erweiterung (12) entsprechenden Durchmessers des schlitzförmigen Hohlraums (13) der einen bzw. der anderen Seitenstrebe (8) des Stützrahmens (3) aufgenommen sind, dessen Breite (b) dem Durchmesser der zugehörigen Tragstange (2) im wesentlichen entspricht und welcher von der Erweiterung (12) weg divergierende Anschlagflächen (14; 15) für die Tragstange (2) aufweist, und wobei

e) die Scheiben (11) jeweils mit einer diametralen Durchgangsbohrung (16) versehen sind, durch welche sich die eine bzw. die andere Tragstange (2) erstreckt.

2. Kopfstütze nach Anspruch 1, dadurch gekennzeichnet, daß die beiden Seitenstreben (8) des Stützrahmens (3) jeweils im Bereich der Erweiterung (12) auf der Außenseite eine Öffnung (17) zum Einsetzen der zugehörigen Scheibe (11) aufweisen, welche durch einen Deckel (18) verschlossen ist.

3. Kopfstütze nach Anspruch 2, dadurch gekennzeichnet, daß die beiden Deckel (18) mit den Seitenstreben (8) des Stützrahmens (3) verrastet sind.

4. Kopfstütze nach Anspruch 1, 2 oder 3, dadurch gekennzeichnet, daß die beiden Scheiben (11) zur Einstellung eines bestimmten Reinbungsmomentes zwischen denselben und dem Stützrahmen (3) in den Erweiterungen (12) von dessen Seitenstreben (8) verspannbar sind.

5. Kopfstütze nach Anspruch 4 in Verbindung mit Anspruch 2 oder 3, dadurch gekennzeichnet, daß zwischen jeder Scheibe (11) und dem benachbarten Deckel (18) ein Reibelement (20) eingespannt ist.

6. Kopfstütze nach einem der vorstehenden Ansprüche, dadurch gekennzeichnet, daß die beiden Scheiben (11) mit den Tragstangen (2) verrastbar sind.

7. Kopfstütze nach Anspruch 6, dadurch gekennzeichnet, daß jede Scheibe (11) mit einem federnden Rastelement (21) versehen ist, welches mit Rastkerben (22) der zugehörigen Tragstange (2) zusammenwirkt.

8. Kopfstütze nach Anspruch 7, dadurch gekennzeichnet, daß die beiden endständigen Rastkerben (22) jeder Tragstange (2) jeweils eine die Verschiebung der zugehörigen Schiebe (11) in der einen bzw. der anderen Richtung von der Reihe von Rastkerben (22) der Tragstange (2) weg sperrende Anschlagfläche (24) für das Rastelement (21) der Scheibe (11) aufweisen.

9. Kopfstütze nach einem der vorstehenden Ansprüche, dadurch gekennzeichnet, daß die beiden Scheiben (11) im Bereich derjenigen Längsstrebe (7) des Stützrahmens (3) angeordnet sind, welche den Tragstangenöffnungen (29) von dessen Seitenstreben (8) benachbart ist.

10. Kopfstütze nach einem der vorstehenden Ansprüche, dadurch gekennzeichnet, daß die beiden Tragstangen (2) zur Verdrehsicherung im Stützrahmen (3) jeweils an dem im Hohlraum (13) der zugehörigen Seitenstrebe (8) desselben aufgenommenen Ende mit einer Abflachung (25) versehen sind, welche an der benachbarten Seitenfläche (26) des Hohlraums (13) und/oder an einer Abflachung (27) der Durchgangsbohrung (16) der zugehörigen Scheibe (11) anliegt.

11. Kopfstütze nach einem der vorstehenden Ansprüche, wobei der Stützrahmen aus Kunststoff besteht, dadurch gekennzeichnet, daß die beiden Scheiben (11) aus Metall oder Kunststoff bestehen.

12. Kopfstütze nach Anspruch 11, dadurch gekennzeichnet, daß die beiden Scheiben (11) aus Kunststoff jeweils mit einem äußeren Metallring oder einer äußeren Metallbeschichtung versehen sind.

13. Kopfstütze nach Anspruch 11 oder 12, dadurch gekennzeichnet, daß die Erweiterungen (12) der beiden Seitenstreben (8) des Stützrahmens (3) zur Aufnahme der Scheiben (11) aus Kunststoff jeweils mit inneren Metallringsegmenten oder inneren Metallbeschichtungen versehen sind.

## Revendications

1. Appuie-tête réglable en hauteur en en inclinaison, possédant une fenêtre centrale (1), pour sièges de véhicules automobiles, qui comprend:

(a) deux broches-supports (2) pouvant être fixées chacune par une première extrémité au dossier du siège de véhicule automobile,

(b) une armature d'appuie-tête (3) montée mobile en translation et en inclinaison par rapport aux broches-supports (2), noyée dans un corps de rembourrage (4) et possédant des montants latéraux creux (8) destinés à recevoir l'autre extrémité de l'une ou de l'autre des broches-supports (2), caractérisé en ce que

(c) l'armature (3) de l'appuie-tête est tourillonnée, mobile en inclinaison, sur deux disques circulaires (11) qui peuvent coulisser sur les broches-supports (2),

(d) les disques (11) étant logés chacun dans un élargissement cylindrique (12), de diamètre correspondant, de la cavité (13) en forme de fente de l'un ou de l'autre des montants latéraux (8) de l'armature (3) de l'appuie-tête, cavité dont la largeur (b) correspond sensiblement au diamètre de la broche-support (2) correspondante, et qui présente des surfaces de butée (14; 15) servant à arrêter la broche-support (2), qui divergent en partant de l'élargissement (12) et

(e) les disques (11) étant munis chacun d'un perçage diamétral traversant (16) à travers lequel s'etend l'une ou l'autre broche-support (2).

2. Appuie-tête selon la revendication 1, caractérisé en ce que les deux montants latéraux (8) de l'armature (3) de l'appuie-tête présentent chacune dans la région de l'élargissement (12), sur le côté extérieur, une ouverture (17) servant pour la mise en place du disque (11) correspondant et qui est fermée par un couvercle (18).

3. Appuie-tête selon la revendication 2, caractérisé en ce que les deux couvercles (18) sont verrouillés par rapport aux montants latéraux (8) de l'armature (3) de l'appuie-tête.

4. Appuie-tête selon l'une des revendications 1, 2 et 3, caractérisé en ce que les deux disques (11) peuvent être serrés dans les élargissements (12) des montants latéraux (8) de l'armature (3) de l'appuie-tête pour établir un couple de friction déterminé entre les disques (11) et l'armature (3) de l'appuie-tête.

5. Appuie-tête selon la revendication 4, en combinaison avec le revendication 2 ou 3, caractérisé en ce qu'un élément de friction (20) est serré entre chaque disque (11) et le couvercle (18) adjacent.

6. Appuie-tête selon une des revendications précédentes, caractérisé en ce que les deux disques (11) peuvent être verrouillés par rapport aux broches-supports (2).

7. Appuie-tête selon la revendication 6, caractérisé en ce que chaque disque (11) est muni d'un élément de verrouillage élastique (21) qui coopère avec des encoches de verrouillage (22) de la broche-support (2) correspondante.

8. Appuie-tête selon la revendication 7, caractérisé en ce que les deux encoches de verrouillage (22) extrêmes de chaque broche-support (2) présentent chacune une surface de butée (24) pour l'élément de verrouillage (21) du disque (11) correspondant, chaque surface arrêtant la translation dudit disque (11), l'une dans un sens et l'autre dans l'autre sens lorsque le disque tend à s'éloigner de la rangée d'encoches de verrouillage (22) de la broche-support (2).

9. Appuie-tête selon une des revendications précédentes, caractérisé en ce que les deux disques (11) sont disposés dans la région de la barre longitudinale (7) de l'armature (3) de l'appuie-tête qui est adjacente aux ouvertures (29) de passage des broches-supports des montants latéraux (8) de cette armature.

10. Appuie-tête selon une des revendications précédentes, caractérisé en ce que les deux broches-supports (2) présentent chacune, pour le blocage en rotation dans l'armature (3) de l'appuie-tête, à l'extrémité qui se loge dans la cavité (13) du montant latéral (8) correspondant, um méplat (25) qui est en appui contre la surface latérale adjacente (26) de la cavité (13) et/ou contre une méplat (27) du perçage traversant (16) du disque (11) correspondant.

11. Appuie-tête selon une des revendications précédentes, dans lequel l'armature de l'appuie-tête est en matière plastique, caractérisé en ce que les deux disques (11) sont en métal ou en matière plastique.

12. Appuie-tête selon la revendication 11, caractérisé en ce que les deux disques (11) en matière plastique sont munis chacun d'une bague extérieure métallique ou d'un revêtement extérieur métallique.

13. Appuie-tête selon la revendication 11 ou 12, caractérisé en ce que les élargissements (12) des deux montants latéraux (8) de l'armature (3) de l'appuie-tête qui sont destinés à recevoir les disques (11) en matière plastique sont munis chacun de segments d'anneau métalliques intérieurs ou de revêtements métalliques intérieurs.

## Claims

1. Adjustable-height and adjustable-tilt head rest with a central window (1) for motor vehicle seats, which has

a) two supporting rods (2) for securing by a respective end to the back rest of the motor vehicle seat and

b) a supporting frame (3) which can be slid and tilted with respect to the supporting rods (2) and is embedded in a cushion body (4), with hollow side struts (8) for receiving the other ends of the one and the other supporting rod (2) characterised in that

c) the supporting frame (3) is pivotally mounted on two round discs (11) which are slidable on the supporting rods (2),

d) the discs (11) each being received in a respective cylindrical socket (12) of corresponding diameter of the slot-shaped cavity (13) of the one and the other side strut (8) of the supporting frame (3), the width (b) of the cavity corresponding substantially to the diameter of the associated supported rod (2) and the cavity having stop surfaces (14; 15) for the supporting rod (2) diverging away from the socket (12), and

e) the discs (11) each being provided with a diametral bore (16) through it, through which extends the one or the other supporting rod (2).

2. Head rest according to claim 1 characterised in that the two side struts (8) of the supporting frame (3) have respectively on the outside in the region of the socket (12) an opening (17) for insertion of the associated disc (11), closed by a cover (18).

3. Head rest according to claim 2 characterised in that the two covers (18) are keyed to the side struts (8) of the supporting frame (3).

4. Head rest according to claim 1, 2 or 3, characterised in that the two discs (11) are clampable in the sockets (12) in the supporting frame side struts (8) for setting a predetermined friction torque between the discs and the supporting frame (3).

5. Head rest according to claim 4 in conjunction with claim 2 or 3 characterized in that a friction element (20) is clamped between each disc (11) and the adjacent cover (18).

6. Head rest according to one of the foregoing claims characterised in that the two discs (11) can be keyed to the supporting rods (2).

7. Head rest according to claim 6 characterised in that each disc (11) is provided with a resilient detent element (21) which co-operates with detent notches (22) in the associated supporting rod (2).

8. Head rest according to claim 7 characterised in that the two end detent notches (22) in each supporting rod (2) have respectively a stop surface (24) for the detent element (21) of the associated disc (11), restricting the displacement of the disc (11) in the one or the other direction from the row of detent notches (22) in the supporting rod (2).

9. Head rest according to one of the foregoing claims characterised in that the two discs (11) are arranged in the region of the longitudinal member (7) of the supporting frame (3) which is adjacent the supporting rod openings (29) of its side struts (8).

10. Head rest according to one of the foregoing claims characterised in that the two supporting rods (2) are each provided with a flat (25) on the end which is received in the cavity (13) of the associated supporting frame side strut (8), to prevent rotation within the supporting frame (3), the flat engaging the adjacent side face (26) of the cavity (13) and/or engaging a flat (27) in the bore (16) in the associated disc (11).

11. Head rest according to one of the foregoing claims in which the supporting frame is made of plastics, characterised in that the two discs (11) are made of metal or plastics.

12. Head rest according to claim 11 characterised in that the two discs (11) of plastics are each provided with an external metal ring or an external metal coating.

13. Head rest according to claim 11 or 12 characterised in that the sockets (12) in the two side struts (8) of the supporting frame (3) are provided with respective inner metal ring segments or inner metal coatings for receiving the discs (11) made of plastics.

FIG. 1

FIG. 2.

FIG. 3

FIG. 4

FIG. 5